# EUROPÄISCHE PATENTSCHRIFT

(11) **EP 1 392 422 B1**
(45) Veröffentlichungstag und Bekanntmachung des Hinweises auf die Patenterteilung: **23.03.2011**
(21) Anmeldenummer: 02754588.8
(22) Anmeldetag: 27.05.2002
(51) Int. Cl.: B01J 2/00

(54) **BESCHICHTETER KÖRNIGER STOFF UND VERFAHREN ZU SEINER HERSTELLUNG**
COATED GRANULAR MATERIAL AND METHOD FOR PRODUCTION THEREOF
MATIERE GRANULEE ENDUITE ET SON PROCEDE DE PRODUCTION

(30) Priorität: 30.05.2001 DE 10126360
(43) Veröffentlichungstag der Anmeldung: 03.03.2004
(73) Patentinhaber: Ashland-Südchemie-Kernfest GmbH, 40721 Hilden (DE)
(72) Erfinder: WINTER, Reinhard, 42489 Wülfrath (DE); PRIEBE, Christian, 42489 Wülfrath (DE); KUHLMANN, Peter, 42489 Wülfrath (DE)
(74) Vertreter: Vossius & Partner
(86) Internationale Anmeldenummer: PCT/EP2002/005813
(87) Internationale Veröffentlichungsnummer: WO 2002/096548

(56) Entgegenhaltungen:
- US-A- 3 259 482
- DATABASE WPI Section Ch, Week 199619 Derwent Publications Ltd., London, GB; Class A21, AN 1996-184869 XP002215010 & JP 08 059788 A (ARAKAWA CHEM IND LTD), 5. März 1996 (1996-03-05)
- GUTHRIE JT ET AL: "UV-curable coatings from palmoil and derivatives" SURFACE COATINGS INTERNATIONAL , Bd. 83, Nr. 6, 2000, Seiten 278-284, XP001040592

## Beschreibung

Die Erfindung betrifft einen beschichteten körnigen Stoff, wobei die Beschichtung das Reaktionsprodukt aus (A) einer säuremodifizierten Fett(säure)komponente und (B) einer Epoxidkomponente umfaßt, sowie ein Verfahren zu seiner Herstellung.

Es ist allgemein bekannt, wasserlösliche Stoffe zur Herabsetzung der Auflösungsgeschwindigkeit und damit zur Verlängerung der Wirkungsdauer mit einer zwar wasserdurchlässigen jedoch wasserun- bzw. schwer löslichen Umhüllung oder Beschichtung zu versehen. Besondere Bedeutung hat diese Technik auf dem Gebiet der Düngemittel erlangt.

In der Vergangenheit wurden verschiedenen Beschichtungsmaterialien vorgeschlagen.

DE-A-1 242 573 beschreibt ein Verfahren zum Einkapseln von Granulaten durch Besprühen mit einem flüssigen Überzugsmittel. Als Überzugsmittel wird ein Copolymerisat aus Dicyclopentadien mit trocknenden oder halbtrocknenden Ölen vorgeschlagen. Die Durchführung dieses Verfahrens erfordert jedoch die Verdünnung des Überzugsmittels mit einem flüchtigen Lösungsmittel auf eine frei fließende Konsistenz, um ein Aufsprühen auf das Granulat zu ermöglichen. Das zugesetzte Lösungsmittel muß während des Verfahrens bei hohen Temperaturen entfernt werden. Dadurch werden brennbare und unter Umständen gesundheitsschädliche Dämpfe freigesetzt. Außerdem wird durch die Trocknung die erforderliche Zeit für einen Beschichtungsvorgang ungünstig in die Länge gezogen. Insgesamt ist ein sehr hoher Energieaufwand sowohl zum Aufheizen aber auch zum Kühlen erforderlich. Durch die frei werdenden Dämpfe ist außerdem eine aufwendige Abluftreinigung erforderlich.

In EP-A-0 230 601 wird ein Verfahren zur Erzeugung-einer wasserdurchlässigen Umhüllung auf körnigen, wasserlöslichen Stoffen durch Beschichtung mit einem Kunstharz beschrieben. Dazu wird eine Beschichtungsmasse verwendet, die ein Polyisocyanat und eine Polyolkomponente aus einem Kondensationsprodukt aus Phenolen und Aldehyden, einen Hydroxylgruppen enthaltenden Weichmacher und gegebenenfalls ein Hydroxylgruppen enthaltendes Verdünnungsmittel umfaßt. Die Beschichtungsmasse wird mit einem Amin als Katalysator ausgehärtet. Dieses Verfahren kann zwar bei relativ niedrigen Temperaturen durchgeführt werden; die eingesetzten Amine zeichnen sich jedoch durch einen niedrigen Siedepunkt und einen äußerst unangenehmen und intensiven Geruch aus. Deshalb erfordert auch dieses Verfahren eine sehr sorgfäitige, technisch sehr aufwendige und damit auch sehr kostenintensive Abluftreinigung.

In US-A-3,259,482 werden Düngemittelgranulate mit einem wasserunlöslichen Harz als Überzug beschrieben. Der Überzug wird aus einer epoxidierten Verbindung, beispielsweise epoxidierten Fetten oder epoxidierten Fettsäureestern und einem Polyester-Härtungsmittel gewonnen. Die Polyesterkomponente ist das Veresterungsprodukt eines polyfunktionellen Alkohols mit einer polyfunktionellen Carbonsäure. Zur Beschichtung des Granulats muß das Harz jedoch in einem schnell trocknenden Lösungsmittel gelöst werden, welches im weiteren Verlauf des Verfahrens entfernt werden muß.

WO 96/41779 betrifft umhüllte Düngemittelgranulate, die mit einem Carboxylgruppen-tragenden Ethylencopolymerisat, bei dem die Carboxylgruppen auch in Form ihrer Alkali-, Erdalkali-, oder Ammoniumsalze vorliegen können, umhüllt sind, wobei das Carboxylgruppen-tragende Ethylencopolymerisat aus a) 75 bis 90 Gew.-% Ethylen und b) 10 bis 25 Gew.-% einer α-olefinisch ungesättigten C₃-C₈-Alkylcarbonsäure aufgebaut ist und wobei solche umhüllten Düngemittelgranulate, die einen Pflanzenschutzwirkstoff enthalten, ausgenommen sind. Die Copolymerisate werden in Form einer wäßrigen Lösung oder wäßrigen Dispersion auf das Düngemittelgranulat aufgebracht. Dadurch kann zwar einerseits auf die Verwendung von gesundheitlich bedenklichen organischen Lösungsmitteln verzichtet werden. Ein Nachteil dieses Verfahrens ist jedoch, daß bei der Aufbringung der wäßrigen Lösung oder Dispersion des Umhüllungsmaterials das wasserlösliche Düngemittelgranulat angelöst werden kann. Dadurch kann während des Verfahrens pro Zeiteinheit nur eine begrenzte Menge des Umhüllungsmaterials zugesetzt werden. Zugleich muß dafür Sorge getragen werden, daß das Wasser rasch verdunsten kann, um ein Auflösen des Granulats zu verhindern. Deshalb ist auch bei diesem Verfahren ein hoher Energieaufwand und eine technisch aufwendige Verfahrensführung erforderlich, um das zugesetzte Wasser möglichst rasch zu entfernen.

Der vorliegenden Erfindung liegt deshalb die Aufgabe zugrunde, einen beschichteten körnigen Stoff und ein Verfahren zum Beschichten von körnigen Stoffen bereitzustellen, bei dem auf den Einsatz von organischen und wäßrigen Lösungsmitteln verzichtet werden kann und weder niedrig siedende Zusatzstoffe benötigt werden noch niedrig siedende Nebenprodukte entstehen, die eine aufwendige Abluftreinigung und Verfahrensführung erforderlich machen. Das Verfahren sollte zu einer schnellen Beschichtung des körnigen Stoffes führten, wobei eine rasche Klebefreiheit der Beschichtung und Rieselfähigkeit des umhüllten Guts erreicht werden sollten. Das Beschichtungsmaterial sollte eine möglichst schnelle und gleichmäßige Benetzung des zu beschichtenden Stoffes ermöglichen und sich auch in sehr dünnen Schichten darauf verteilen lassen. Das Verfahren sollte zudem eine störungsfreie Wiederholung des Beschichtungsvorgangs in kurzen Abständen ermöglichen.

Die Beschichtung selbst sollte verschiedenen anwendungstechnischen Anforderungen genügen: Die Überzüge sollten (in beiden Richtungen) wasserdurchlässig bzw. wasserdampfdurchlässig sein und eine kontrollierbare und gleichmäßige Abgabe des aus dem körnigen Gut gelösten Stoffes nach außen ermöglichen. Der Überzug sollte außerdem nicht zu spröde sein, sondern eine gewisse elastische Festigkeit aufweisen, um ein Aufplatzen beim Lagern, Ausbringen oder beim Transport zu verhindern. Die Beschichtung sollte bevorzugt nach Beendigung der Wirkungsdauer biologisch abbaubar sein.

Diese Aufgabe wurde durch den überraschenden Befund gelöst, daß sich durch Umsetzung einer säuremodifizierten Fett(säure)komponente mit einer Epoxidkomponente ein Beschichtungsmaterial bereitstellen läßt, welches dem vorstehend genannten Anforderungsprofil gerecht wird. Überraschenderweise weist das Beschichtungsmaterial der vorliegenden Erfindung die erforderlichen Eigenschaften auch ohne Zusatz von organischen Lösungsmitteln oder Wasser auf.

Gegenstand der vorliegenden Erfindung ist somit ein beschichteter körniger Stoff, wobei die Beschichtung das Reaktionsprodukt aus (A) einem Addukt, welches einem Addukt, welches säuremodifizierte durch Umsetzung von
(A-i) einer Fett(säure)komponente mit einer durchschnittlichen Doppelbindüngsfunktionalität von mindestens 2 im Fettsäureres mit
(A-ii) einer mindestens einfach ungesättigten Carbonsäurekomponente oder Carbonsäureanhydridkomponente
erhältlich ist, und (B) einer Epoxidkomponente umfasst. Das Addukt (A) wird hier häufig als "säuremodifizierte Fett(säure)komponente" bezeichnet.

Gegenstand der Erfindung ist weiterhin ein Verfahren zur Herstellung eines beschichteten körnigen Stoffes, umfassend die Schritte (a) Bereitstellen eines körnigen Stoffes, (b) Bereitstellen eine Beschichtungsmaterials, umfassend (A) eine säuremodifizierte Fett(säure)komponente und (B) eine Epoxidkomponente, (c) Zugabe des Beschichtungsmaterials zu dem bereitgestellten körnigen Stoff, (d) Erzeugung einer Beschichtung auf dem körnigen Stoff und (e) gegebenenfalls Wiederholung der Schritte (c) und (d).

Der zu beschichtende körnige Stoff ist nicht kritisch. Grundsätzlich könnten alle körnigen Stoffe mit Hilfe des vorliegenden Verfahrens mit einer Beschichtung versehen werden. Der körnige Stoff kann beispielsweise aus asymmetrisch geformten körnigen Stoffen (Granlulaten) oder symmetrisch geformten körnigen Stoffen (Pellets) ausgewählt werden. Typische Pellets können zum Beispiel die Form einer Kugel, eines Stäbchens, eines Zylinders oder eines Ellipsoids aufweisen. Typische Granulatkörner schließen asymmetrische Aggregate aus Pulverpartikeln, ganzen Kristallen, Kristallbruchstücken oder Partikeln oder sonstige Bruchstücke ein. Der körnige Stoff kann porös oder nicht porös sein.

Die Korngröße der zu beschichtenden körnigen Stoffe ist ebenfalls nicht kritisch. Sie kann beispielsweise von 0,5 bis 10 mm reichen (längster mittlerer Durchmesser), wobei eine mittlere Korngröße im Bereich von 1 bis 5 mm bevorzugt ist.

Eine besondere Bedeutung kommt dem Verfahren bei der Beschichtung von wasserlöslichen körnigen Stoffen oder von solchen körnigen Stoffen zu, die einen wasserlöslichen Anteil aufweisen oder mit einem wasserlöslichen Stoff imprägniert sind. Bevorzugte zu umhüllende körnige Stoffe werden deshalb aus ganz oder teilweise wasserlöslichen körnigen Stoffen ausgewählt. Beispiele hierfür sind Agrochemikalien, wie Düngemittel, Pflanzenschutzmittel, Insektizide, Fungizide, Bodenverbesserungsmittel, Trocknungsmittel oder Gemische davon.

Düngemittel, die sich für die Beschichtung eignen, sind bekannte Granulate oder Pellets von organischen und mineralischen Düngern sowie Gemischen davon. Es kommen beispielsweise Einzel- oder Mehrnährstoffdünger in Betracht, die einzeln oder in Kombination Nährstoffe, wie Stickstoff, Kalium, oder Phosphor in Form ihrer Salze oder Oxide enthalten. Beispiele hierfür sind NP-, NK-, PK- oder NKP-Dünger, wie Kalkammonsalpeter, Ammonsulfat, Ammonsulfatsalpeter, Calciumcyanamid oder Harnstoff. Neben den genannten . Hauptbestandteilen können in den Düngemittelgranulaten auch Salze von Spurenelementen, wie Magnesium, Eisen, Mangan, Kupfer, Zink, Molybdän und/oder Bor in geringen Mengen, üblicherweise in Mengen von 0,5 bis 5 Gew.-%, enthalten sein. Geeignete organische Düngemittel sind beispielsweise Guano, Fischmehl, Knochenmehl oder Lignin.

In der vorliegenden Erfindung können auch sehr stark wasserlösliche oder hygroskopische Stoffe als zu beschichtender körniger Stoff verwendet werden, z.B. Trocknungsmittel wie Phosphorpentoxid oder Calciumchlorid. Durch die Beschichtung kann ein zu rasches Zerfließen in feuchter Umgebung verhindert werden.

Die Umhüllung der erfindungsgemäßen Granulate umfaßt das Reaktionsprodukt einer säuremodifizierten Fett(säure)komponente (A) mit einer Epoxidkomponente (B).

Der Begriff "Fett(säure)komponente" im Sinne der vorliegenden Erfindung umfaßt sowohl Fettkomponenten, wie natürliche und synthetische Triglyceride, als auch Fettsäurekomponenten, wie an der Carboxyleinheit derivatisierte Fettsäuren und Fettalkohole.

Unter dem Begriff "Carbonsäurerest" oder Cabonsäureeinheit" wird im Foigenden die Carboxylgruppe einer Fettsäure verstanden, während unter dem Begriff "Fettsäurerest" oder "Fettsäureeinheit" der Kohlenwasserstoffrest einer Fettsäure verstanden wird.

Der Begriff "säuremodifiziert" beschreibt solche ursprünglich ungesättigten Verbindungen, in die durch Reaktion der ungesättigten Einheiten mit ungesättigten Carbonsäuren oder Carbonsäureanhydriden Säurefunktionalität(en) eingeführt wurde(n). Es ist beispielsweise bekannt, in ungesättigte Harze Säurefunktionalität durch Umsetzung (z.B. durch Diels-Alder-Reaktion) mit ungesättigten Carbonsäuren oder Carbonsäureanhydriden nachträglich oder durch Copolymerisation mit den das Harz bildenden, ungesättigten Monomeren einzuführen.

Unter einer säuremodifizierten Fett(säure)komponente (A) wird demzufolge in der vorliegenden Erfindung ein Addukt verstanden, welches ,

Als Fett(säure)komponente (A-i) können prinzipiell alle natürlichen oder synthetischen Triglyceride oder Ester anderer mehrwertiger Alkohole mit Fettsäuren aber auch Fettsäuren oder Carbonsäure-Derivate von Fettsäuren oder Fettalkohole sowie deren Derivate verwendet werden, solange sie mindestens zwei Doppelbindungen im Fettsäurerest aufweisen. Die Konfiguration der Doppelbindung(en) ist in der vorliegenden Erfindung nicht wesentlich. Die Doppelbindung(en) im Fettsäureanteil können cis oder trans konfiguriert sein. Die mehreren Doppelbindungen können konjugiert oder nicht konjugiert sein.

Um eine spätere polymere Vernetzungsreaktion mit der Epoxidkomponente (B) zu ermöglichen, beträgt die durchschnittliche Doppelbindungsfunktionalität der Fett(säure)komponente (A-i) mindestens 2, bevorzugt 3,0 bis 9,0.

Bevorzugt werden solche Fett(säure)komponenten (A-i) verwendet, die im Fettsäureanteil eine Kettenlänge von 3 bis 24 Kohlenstoffatomen, bevorzugt von 10 bis 22 Kohlenstoffatomen, aufweisen.

Zur Herstellung der säuremodinzierten Fett(säure)komponente (A) eignen sich mehrere verschiedene Formen der Komponente (A-i).

Die Fettsäurekomponente (A-i) kann beispielsweise in Form von natürlichen oder synthetischen Triglyceriden bereitgestellt werden.

Die Verteilung der Doppelbindung(en) auf das Triglycerid ist dabei nicht wesentlich. Beispielsweise eignen sich Triglyceride, die nur eine Fettsäure mit mindestens zwei Doppelbindungen aufweisen, wobei die beiden anderen Fettsäuren gesättigt oder ungesättigt sein können. Die Doppelbindungen können aber auch auf die Fettsäurereste verteilt sein.

In einer bevorzugten Ausführungsform wird die Komponente (A-i) in Form von natürlichen Fetten und Ölen bereitgestellt. Dafür eignen sich beispielsweise Leinöl, Hanföl, Rapsöl, Sonnenblumenöl, Baumwollsaatöl, Ricinusöl, Sojaöl, Erdnußöl, Kokosnußöl, Palmkernöl, Fischtranöl, Fischöl, Lardöl, Tallöl, Schweineschmaiz, Rindertalg, Cashewnußöl, Palmöl oder Gemische davon.

Natürliche Öle und Fette liegen als Gemisch verschiedener Triglyceride vor. Dementsprechend können in einem natürlichen Fett oder Öl auch Triglyceride enthalten sein, die ausschließlich gesättigte Fettsäurereste aufweisen. Dieser Anteil stört an sich weder bei der Umsetzung mit der Carbonsäureeinheit zur Komponente (A) als auch bei der späteren Umsetzung der Komponenten (A) und (B). Falls erwünscht, kann dieser Anteil abgetrennt werden. In einer bevorzugten Ausführungsform findet jedoch keine Abtrennung statt. Bevorzugt sollte die Menge an gesättigten Triglyceriden einen Anteil von 15%, bevorzugt von 12% besonders bevorzugt von 10%, bezogen auf die Gesamtmenge an Triglyceriden, nicht überschreiten. Erfindungsgemäß werden deshalb solche Fette und Öle bevorzugt, die einen möglichst hohen Anteil an ungesättigten Fettsäuren aufweisen. Der Anteil an ungesättigten. Fettsäuren läßt sich nach bekannten Methoden mit Hilfe der Iodzahl ermitteln.

Neben natürlichen und synthetischen Glycerin-Fettsäureester eignen sich auch ungesättigte Ester anderer Polyalkohole mit Fettsäuren als Fett(säure)komponente (A-i). Als mehrwertige Alkohole können beispielsweise gesättigte aliphatische Alkohole mit mindestens zwei, bevorzugt zwei bis sechs Hydroxylgruppen pro Molekül und 2 bis 20, bevorzugt 2 bis 6 Kohlenstoffatomen verwendet werden. Spezielle Beispiele sind Ethylenglykol, Diethylenglykol, Propylenglykol, Dipropylenglykol, Neopentylglykol, Glycerin, Trimethylolpropan, Pentaerythrit, Cyclohexandiol, Threit, Erythrit und Sorbit. Dabei können die Hydroxylgruppen jeweils vollständig oder nur teilweise mit Fettsäuren verestert sein. Die Fettsäurereste können jeweils gleich oder unterschiedlich sein.

In einer anderen Ausführungsform kann die Fett(säure)komponente (A-i) in Form von mindestens zweifach ungesättigten Fettsäuren und deren Derivaten bereitgestellt werden. Hierzu können verzweigte oder geradkettige, ungesättigte Fettsäuren oder Fettsäurederivate sowie Gemische hieraus verwendet werden.

Als Fettsäurederivate werden üblicherweise solche Verbindungen verstanden, bei denen die Carbonsäureeinheit der Fettsäure chemisch modifiziert ist. Die Carbonsäureeinheit kann beispielsweise als Ester oder Amid vorliegen oder zum Alkohol reduziert sein, wobei die Alkoholfunktion entweder frei oder in Form eines Esters oder Ethers vorliegen kann.

Als Fettsäureester kommen beispielsweise Verbindungen der allgemeinen Formel

R-CO-OR¹ (I)

in Betracht, wobei R ein verzweigter oder unverzweigter Kohlenwasserstoffrest mit 3 bis 24 Kohlenstoffatomen, vorzugsweise mit 8 bis 20 Kohlenstoffatomen ist, der mindestens zwei Doppelbindung(en) aufweist, und R¹ ein geradkettiger oder verzweigter Alkylrest mit 1 bis 21, vorzugsweise mit 1 bis 4 Kohlenstoffatomen ist.

Als Fettsäureamide kommen beispielsweise Verbindungen der allgemeinen Formel

R-CO-NR²R³ (II)

in Betracht, wobei R ein verzweigter oder unverzweigter Kohlenwasserstoffrest mit 3 bis 24 Kohlenstoffatomen, vorzugsweise mit 8 bis 20 Kohlenstoffatomen ist, der mindestens zwei Doppelbindungen aufweist, und R² und R³ unabhängig ein Wasserstoffatom oder einen verzweigten oder unverzweigten C₁-C₁₂-, vorzugsweise C₁-C₆-Alkylrest darstellen.

Geeignete Fettalkohole und Fettalkoholderivate sind beispielsweise solche der allgemeinen Formel

R-O-R⁴ (III)

wobei R ein verzweigter oder unverzweigter Kohlenwasserstoffrest mit 3 bis 24 Kohlenstoffatomen, vorzugsweise mit 8 bis 20 Kohlenstoffatomen ist, der mindestens zwei Doppelbindungen aufweist, und R⁴ ein Wasserstoffatom, einen verzweigten oder unverzweigten C₁-C₁₂-, vorzugsweise C₁-C₆-Alkylrest darstellt oder einen Rest -(CO)R⁵, wobei R⁵ ein verzweigter oder unverzweigter C₁-C₁₂- vorzugsweise C₁-C₆-Alkylrest ist.

Als Fettalkoholether können auch Ether aus Fettalkoholen mit Polyolen, z.B. mit Glycerin, Trimethylolpropan, Pentaerythrit oder Propandiol verwendet werden.

Besonders bevorzugt sind solche Fettsäuren und Fettsäurederivate, bei denen der Rest R in den Formeln (I) bis (III) einen natürlichen zweifach ungesättigten Fettsäurerest, z. B. einen Palmitoleinsäure-, Ölsäure-, Erucasäure-, Sorbinsäure-, Linolsäure- oder Linolensäurerest, darstellt.

Die vorstehend genannten Verbindungen (A-i) können einzeln oder im Gemisch verwendet werden.

Als Carbonsäurekomponente (A-ii) eignen sich ungesättigte Carbonsäuren oder Carbonsäureanhydride, die mindestens eine Doppelbindung aufweisen. Die Stellung der Doppelbindung zur Säure- oder Anhydrideinheit ist nicht kritisch. Besonders günstige Ergebnisse werden jedoch erhalten, wenn die Doppelbindung in konjugierter Stellung zur Carbonsäure- oder Anhydrideinheit vorliegt. Die Carbonsäurekomponente (A-ii) kann aliphatisch, einfach ungesättigt, mehrfach ungesättigt, oder aromatisch sein. Zur Herstellung der säuremodifizierten Fett(säure)komponente (A) können eine einzige Carbonsäurekomponente oder Gemische aus verschiedenen Carbonsäurekomponenten (A-ii) verwendet werden.

In einer bevorzugten Ausführungsform der vorliegenden Erfindung werden zur Herstellung der Komponente (A) Carbonsäureanhydride von Dicarbonsäuren verwendet, die mindestens eine, bevorzugt ein bis drei, besonders bevorzugt eine Doppelbindung aufweisen und typischerweise insgesamt 4 bis 15, bevorzugt 4 bis 8 Kohlenstoffatome umfassen. Von diesen sind insbesondere solche Carbonsäureanhydride bevorzugt, bei denen mindestens eine Doppelbindung in konjugierter Stellung zur Anhydrideinheit vorliegt.

Geeignete ungesättigte Carbonsäuren sind beispielsweise Maleinsäure, Acrylsäure, Methacrylsäure, Phthalsäure oder Fumarsäure.

Geeignete ungesättigte Carbonsäureanhydride sind Maleinsäureanhydrid, ltaconsäureanhydrid, Phthalsäureanhydrid, Naphthalin-1,8-dicarbonsäureanhydrid, Nadicsäureanhydrid oder Gemische davon. Besonders bevorzugt wird die Carbonsäurekomponente (A-ii) aus Maleinsäureanhydrid, Itaconsäureanhydrid, Phthalsäureanhydrid und Gemischen davon ausgewählt.

Als Komponente (A) eignen sich besonders Addukte von Malein- und/oder Phthalsäureanhydrid an Sonnenblumenöl, Sojaöl, oder Leinöl oder an einfach oder mehrfach ungesättigte Fettsäureester einfacher Alkohole, bevorzugt von C₁-C₄-Alkanolen, wobei der Fettsäurerest eine Kettenlänge von 5 bis 24 Kohlenstoffatomen, bevorzugt von 10 bis 22 Kohlenstoffatomen aufweist.

Die Epoxidkomponente (B) ist nicht in besonderer Weise begrenzt. Als Epoxidkomponente können sowohl Verbindungen mit endständigen als auch mit mittelständigen Epoxidgruppen eingesetzt werden. Die Epoxidkomponente sollte bevorzugt eine durchschnittliche Epoxidfunktionalität von mindestens zwei Epoxidgruppen pro Molekül aufweisen, um den Aufbau eines polymeren Netzwerks zu ermöglichen. Das Molekulargewicht der Epoxidverbindungen liegt typischerweise im Bereich von 200 bis 3000. Der Epoxidsauerstoffgehalt kann sich üblicherweise zwischen 1 und 20, vozugsweise zwischen 5 und 15 Gew.-% bewegen.

Beispiele für Epoxidverbindungen mit endständigen Epoxidgruppen sind Glycidylether, die durch Umsetzung von hydroxylgruppentragenden Verbindungen mit Epichlorhydrin erhalten werden, z.B. Epoxidharze auf der Basis von Bisphenol-A oder Bisphenol-F, Reaktionsprodukte des Epichlorhydrins mit o-Kresol- oder Phenol-Novolaken, Glycidylether aus Polyolen wie 1,6-Hexandiol, Trimethylolpropan, Glycerin oder Polyglycerin.

Darüber hinaus eignen sich endständige oder mittelständige Epoxide, die durch Epoxidierung von Olefinen oder anderen ungesättigten Verbindungen mit einem Epoxidierungsmittel, z.B. mit Perameisensäure entstehen. Auch Umsetzungsprodukte des Glycidols mit Epoxiden, Isocyanaten oder anderen Verbindungen sind prinzipiell geeignet.

Weitere geeignete Verbindungen mit mittelständigen Epoxidgruppen schließen (an im Fettsäurerest ursprünglich vorhandenen ungesättigten Einheiten) epoxidierte Fette und Öle sowie epoxidierte Fettsäurederivate ein. Geeignete Fettsäurederivate schließen epoxidierte Ester von Fettsäuren mit ein- oder mehrwertigen Alkoholen, epoxidierte Fettsäureamide, und Ester oder Ether epoxidierter Fettalkohole ein.

Beispiele für epoxidierte Fettsäureester sind Ester von (an im Fettsäurerest ursprünglich vorhandenen ungesättigten Einheiten) epoxidierten Fettsäuren mit ein- oder mehrwertigen Alkoholen. Geeignete einwertige Alkohole sind beispielsweise verzweigte oder unverzweigte C₁-C₆-Alkanole, wie Methanol, Ethanol, Iso- und n-Propanol, iso- und n-Butanol. Geeignete mehrwertige Alkohole umfassen gesättigte aliphatische Alkohole mit mindestens zwei, bevorzugt zwei bis sechs Hydroxylgruppen pro Molekül und 2 bis 20, bevorzugt 2 bis 6 Kohlenstoffatomen. Spezielle Beispiele sind Ethylenglykol, Diethylenglykol, Propylenglykol, Dipropylenglykol, Neopentylglykol, Glycerin, Trimethylolpropan, Pentaerythrit, Cyclohexandiol, Threit, Erythrit und Sorbit.

Beispiele für epoxidierte Fettsäureamide sind Amide von epoxidierten Fettsäuren mit NH₃, oder mit einfachen primären oder sekundären Aminen und Diaminen, die z.B. 1 bis 12, vorzugsweise 1 bis 6 Kohlenstoffatome aufweisen, wie Methylenamin, Dimethylenamin, Methylethylamin, Methylendiamin oder Diethylenamin.

Als epoxidierte Fettalkoholderivate können Ester epoxidierter Fettalkohole mit einfachen C₁-C₇-, vorzugsweise C₂-C₇-Carbonsäuren, wie Essigsäure, Buttersäure oder Benzoesäure, oder Ether epoxidierter Fettalkohole mit ein- oder mehrwertigen Alkoholen erwähnt werden. Geeignete einwertige Alkohole sind beispielsweise verzweigte oder unverzweigte C₁-C₆-, vorzugsweise C₁-C₄-Alkanole, wie Methanol, Ethanol, iso- und n-Propanol, iso- und n-Butanol. Geeignete mehrwertige Alkohole umfassen gesättigte aliphatische Alkohole mit mindestens zwei, bevorzugt zwei bis sechs Hydroxylgruppen pro Molekül und 2 bis 20, bevorzugt 2 bis 6 Kohlenstoffatomen. Spezielle Beispiele sind Ethylenglykol, Diethylenglykol, Propylenglykol, Dipropylenglykol, Neopentylglykol, Glycerin, Trimethylolpropan, Pentaerythrit, Dipentaerythrit, Cyclohexandiol, Threit, Erythrit und Sorbit.

Besonders geeignete epoxidierte Fettsäurederivate weisen im Fettsäureanteil eine Kettenlänge von 5 bis 24, bevorzugt 10 bis 22 Kohlenstoffatomen auf.

Als Epoxidkomponente (B) eignen sich auch polymere Epoxidverbindungen, wie epoxidiertes Polyoctylen und epoxidiertes Polyisopren. Auch Gemische aus verschiedenen Epoxidkomponenten können verwendet werden.

Besonders bevorzugt sind Bisphenol-A- und Bisphenol-F-Epoxidharze, Glycidylether des Trimethylolpropans und des Glycerins, epoxidierte Soja-, Lein-. Raps- oder Hanföle und Gemische davon.

Zur Herstellung des beschichteten körnigen Stoffes wird zunächst der körnige Stoff bereitgestellt und vor der Zugabe des Beschichtungsmaterials gegebenenfalls auf eine Temperatur von 50 bis 250°C. bevorzugt 80 bis 150°C vorgeheizt.

Zur Bereitstellung des Beschichtungsmaterials wird die säuremodifizierte Fett(säure)komponente (A) mit der Epoxidkomponente (B) vermischt. Dem Beschichtungsmaterial können nach Wunsch weitere Zusatzstoffe zugesetzt werden, wie Katalysatoren, Modifizierungsmittel, Füllstoffe oder sonstige Bestandteile, die für den besonderen Anwendungszweck eines bestimmten beschichteten körnigen Stoffes günstig sind.

Die Beschichtung läßt sich im Verfahren der Erfindung am einfachsten in einem rotierenden Gefäß, z.B. einer Trommel, die vorzugsweise mit einem Randabstreifer versehen ist, durchführen.

Die Zugabe des Beschichtungsmaterials zum körnigen Stoff kann kontinuierlich oder portionsweise erfolgen. Die zugesetzten Portionen können gleich große oder unterschiedlich große Mengen an Beschichtungsmaterial umfassen. Es ist bevorzugt, mit der Zugabe der nächsten Portion Beschichtungsmaterial solange abzuwarten, bis sich die im vorangegangenen Schritt zugesetzte Menge an Beschichtungsmaterial möglichst gleichmäßig auf dem körnigen Stoff verteilt hat. Dies kann je nach Temperatur und Menge und Art des verwendeten Beschichtungsmaterials und Granulats einen Zeitraum von beispielsweise 2 bis 10 Minuten umfassen. Eine kontinuierliche Zugabe kann typischerweise einen Zeitraum von 15 bis 60 Minuten in Anspruch nehmen. Es ist besonders bevorzugt, das Beschichtungsmaterial ohne Zusatz von Lösungsmitteln oder Wasser bereitzustellen.

Die Menge an zugesetztem Beschichtungsmaterial ist nicht wesentlich. Aus wirtschaftlichen Gesichtspunkten ist es jedoch wünschenswert, eine möglichst geringe Menge an Beschichtungsmaterial zu verwenden. Gleichzeitig sollte sich jedoch mit dieser Menge noch eine funktionsfähige Umhüllung auf dem Granulat erzeugen lassen. Üblicherweise wird das Beschichtungsmaterial in einer Menge von etwa 3 bis 40 Gew.-%, bevorzugt 5 bis 15 Gew.-% bezogen auf den zu umhüllenden körnigen Stoff eingesetzt. Durch die Menge an Beschichtungsmaterial läßt sich außerdem die Freisetzungsgeschwindigkeit des Stoffes aus den beschichteten Körnern steuern.

Es ist bevorzugt, den zu beschichteten körnigen Stoff während des gesamten Verfahrens in Bewegung zu halten. Dies kann beispielsweise durch Rühren oder Schütteln erfolgen. Zur Durchführung des Verfahrens sind jedoch auch andere Auftragsverfahren denkbar. Beispielsweise kann die Bewegung des körnigen Stoffes mittels Wirbelschichtverfahren erfolgen. Hierbei wird mit einem Wirbelgas eine Wirbelschicht des körnigen Stoffes erzeugt und anschließend das Beschichtungsmaterial in die Wirbelschicht eingebracht. Derartige Wirbelschicht-Auftragsverfahren sind beispielsweise in US-A-5,211,985 beschrieben.

Die Härtung des Beschichtungsmaterials kann z.B. durch Erhöhung der Temperatur oder den Zusatz von Katalysatoren gesteuert werden. Das Verfahren wird üblicherweise bei einer Temperatur von 50 bis 250°C, bevorzugt 80 bis 150°C durchgeführt. Als Katalysatoren eignen sich die üblicherweise auf dem Fachgebiet für die Katalyse von Reaktionen zwischen Epoxid- und Säure/Anhydrideinheiten verwendeten Katalysatoren. Diese beinhalten stickstoffhaltige Katalysatoren, wie tertiäre Amine, Imidazole und deren Derivate, Polyimidazole und Copolymere aus Imidazol und geeigneten Comonomeren, Dicyanamid, quartäre Ammoniumverbindungen, Bortrifluoridderivate sowie Calcium- oder Magnesiumsalze von Fettsäuren, wie Calcium- oder Magnesiumstearat.

Die Beschichtung des körnigen Stoffes kann sich aus mehr als einer Schicht des gehärteten Beschichtungsmaterials (Umsetzungsproduktes) zusammensetzen, und die Schichten können jeweils gleiche oder unterschiedliche Schichtdicke aufweisen und jeweils teilweise oder vollständig umhüllend ausgeprägt sein. Die Umhüllung sollte insgesamt jedoch möglichst vollständig umhüllend ausgeprägt sein, um eine frühzeitige oder zu schnelle Abgabe des körnigen Stoffes oder des in dem körnigen Stoff enthaltenen Wirkstoffs zu verhindern.

Die Beschichtung ist in beiden Richtungen wasser- bzw. wasserdampfdurchlässig. Die beschichteten körnigen Stoffe der vorliegenden Erfindung zeichnen sich deshalb durch eine gleichmäßige Wirkstoffabgabe aus. Je nach Dicke und Art des Umhüllungsmaterial ist beispielsweise ein Düngemittelgranulat mit einer Wirkdauer von einem Monat bis zu zwei Jahren herstellbar. Die Beschichtung weist außerdem gute mechanische Eigenschaften auf. Ein weiterer Vorteil der erfindungsgemäßen beschichteten körnigen Stoffe ist, daß das Umhüllungsmaterial überwiegend auf nachwachsenden Rohstoffen basiert und dadurch ökologisch bevorzugt ist.

Das Verfahren eignet sich zur Beschichtung praktisch aller Arten an körnigen Stoffen. Die besonderen Vorteile des Verfahren treten jedoch bei vollständig oder teilweise wasserlöslichen körnigen Stoffen besonders zum Vorschein. Das Verfahren kann bei relativ niedrigen Temperaturen und in Abwesenheit von unerwünschten Lösungsmitteln durchgeführt werden.

### Beispiele

Die Erfindung wird durch die nachfolgenden, nicht beschränkenden Beispiele erläutern.

### 1. Herstellung der Komponente (A) = säuremodifizierte Fett(säure)komponente, nachstehend als "Härter" bezeichnet

### Härter 1: Maleinsäureanhydrid-Sojaöl-Addukt

In einem 4-Liter-Dreihalskolben mit Rückflußkühler, Thermometer und KPG-Rührer wurden 1829 g Sojaöl und 640 g Maleinsäureanhydrid eingewogen und unter Rühren in einer Stickstoffatmosphäre auf 200°C +/-5°C erwärmt. Das Reaktionsgemisch wurde 3 h bei dieser Temperatur gehalten. Es wurde ein viskoses, klares braunes Produkt erhalten.

### Härter 2: Maleinsäureanhydrid-Leinöl-Addukt

In einem 4-Liter-Dreihalskolben mit Rückflußkühler, Thermometer und KPG-Rührer wurden 1935 g Lackleinöl und 1065 g Maleinsäureanhydrid eingewogen und unter Rühren in einer Stickstoffatmosphäre auf 200°C +/-5°C erwärmt. Das Reaktionsgemisch wurde 7 h bei dieser Temperatur gehalten. Es wurde ein viskoses, klares braunes Produkt erhalten.

### Härter 3: Maleinsäureanhydrid-Leinöl-Rapsfettsäure-Addukt

In einem 4-Liter-Dreihalskolben mit Rückflußkühler, Thermometer und KPG-Rührer wurden 1500 g Lackleinöl, 225 g Rapsfettöl und 775 g Maleinsäureanhydrid eingewogen und unter Rühren in einer Stickstoffatmosphäre auf 200°C +/-5°C erwärmt. Das Reaktionsgemisch wurde 4 h bei dieser Temperatur gehalten. Es wurde ein viskoses, klares braunes Produkt erhalten.

### 2. Herstellung von umhüllten Granulaten

Die Beschichtungen wurden in einer rotierenden Trommel durchgeführt. Die Geschwindigkeit war so eingestellt, daß eine ausreichende Vermischung des Beschichtungsguts gewährleistet war. Während des gesamten Beschichtungsvorgangs wurde das Granulat in Bewegung gehalten.

Zur Beschichtung wurde ein handelsüblicher unbehandelter NPK-Mineraldünger mit einer Korngröße von 3 bis 6 mm eingesetzt. Vor Beschichtungsbeginn wurde der Dünger in einem Ofen auf ca. 120°C vorgeheizt.

### Beispiel 1

In einem Becherglas wurde eine Mischung aus 23,0 Gew.-% Trimethylolpropantriglycidylether und 77 Gew.-% Härter 1 hergestellt. Die Beschichtungsmasse, insgesamt 15 Gew.-% bezogen auf den Dünger, wurde dem Beschichtungsgut in vier gleich großen Portionen zugegeben, wobei die nächste Zugabe erst erfolgte, wenn die zuvor zugegebene Portion ausgehärtet war. Die Beschichtungszeit betrug insgesamt ca. 20 bis 30 Minuten. Der noch heiße, umhüllte Dünger war nicht klebrig, klebte nicht zusammen und war frei fließend/rieselnd. Die Härtungstemperatur betrug 150°C.

### Beispiel 2

In einem Becherglas wurde eine Mischung aus 31,0 Gew.-% epoxidiertem Leinöl und 69 Gew.-% Härter 2 hergestellt. Die Beschichtungsmasse, insgesamt 10 Gew.-% bezogen auf den Dünger, wurde dem Beschichtungsgut in fünf gleich großen Portionen zugegeben, wobei die nächste Zugabe erst erfolgte, wenn die zuvor zugegebene Portion ausgehärtet war. Die Beschichtungszeit betrug insgesamt etwa 20 bis 30 Minuten. Die Härtungstemperatur betrug 150°C.

Der noch heiße Dünger war nicht klebrig, klebte nicht zusammen und war frei rieselfähig.

### Beispiel 3

In einem Becherglas wurde eine Mischung aus 29,0 Gew.-% epoxidiertem Leinöl, 70,5 Gew.-% Härter 3 und 0,5 Gew.-% 4-Methylimidazol hergestellt. Die Beschichtungsmasse, insgesamt 10 Gew.-% bezogen auf den Dünger, wurde dem Beschichtungsgut in fünf gleich großen Portionen zugegeben, wobei die nächste Zugabe erst erfolgte, wenn die zuvor zugegebene Portion ausgehärtet war. Die Beschichtungszeit betrug insgesamt etwa 20 bis 30 Minuten. Die Härtungstemperatur betrug 140°C.

Der noch heiße Dünger war nicht klebrig, klebte nicht zusammen und war frei rieselfähig.

### Beispiel 4

In einem Becherglas wurde eine Mischung aus 28,0 Gew.-% epoxidiertem Leinöl, 8,0 Gew.-% epoxidiertem Trimethylolpropantrioleat, 63,0 Gew.-% Härter 2 und 1,0 Gew.-% Magnesiumstearat hergestellt. Die Beschichtungsmasse, insgesamt 8,0 Gew.-% bezogen auf den Dünger, wurde dem Beschichtungsgut kontinuierlich über einen Zeitraum von ca. 15 Minuten zugegeben. Anschließend wurde noch 20 Minuten heiß ausgehärtet. Die Härtungstemperatur betrug 160°C.

Der noch heiße Dünger war nicht klebrig, klebte nicht zusammen und war frei rieselfähig.

### Beispiel 5

In einem Becherglas wurde eine Mischung aus 31,0 Gew.-% epoxidiertem Leinöl und 69 Gew.-% Härter 2 hergestellt. Die Beschichtungsmasse, insgesamt 8 Gew.-% bezogen auf den Dünger, wurde dem Beschichtungsgut in sieben gleich großen Portionen zugegeben, wobei die nächste Zugabe erst erfolgte, wenn die zuvor zugegebene Portion ausgehärtet war. Die Beschichtungszeit betrug insgesamt ca. 60 Minuten. Die Härtungstemperatur betrug 110°C.

Der noch heiße Dünger war nicht klebrig, klebte nicht zusammen und war frei rieselfähig.

### Bestimmung der Wirkstoffabgabe

Zur Bestimmung der Wirkstoffabgabe wurden jeweils 12,5 g der nach den Beispielen 1 bis 5 hergestellten beschichteten Dünger in 1250 g Wasser gegeben und bei 22°C gelagert. Die in Lösung gegangene Wirkstoffmenge wurde über die Zunahme der elektrischen Leitfähigkeit bestimmt. Durch Vergleich mit nicht beschichtetem Basisdünger läßt sich die in Lösung gegangene Wirkstoffmenge ermitteln. Die Ergebnisse sind in Tabelle 1 dargestellt.

**Tabelle1:In Lösung gegangene Wirkstoffmenge in % [bezogen auf nicht beschichteten Basisdünger]**

| Zeit | Beispiel 1 | Beispiel 2 | Beispiel 3 | Beispiel 4 | Beispiel 5 | Vergleichsbeispiel |
|---|---|---|---|---|---|---|
| 24 h | 2,3 | 4,1 | 2,2 | 1,8 | 8,2 | 4,2 |
| 48 h | 12,1 | 18,3 | 11,1 | 12,2 | 29,2 | 14,3 |
| 1 Woche | 18,2 | 26,7 | 16,7 | 15,8 | 35,4 | 21,2 |
| 2 Wochen | 23,8 | 41,3 | 22,1 | 19,1 | 50,5 | 30,0 |
| 3 Wochen | 29,4 | 55,2 | 25,4 | 22,6 | 72,3 | 31,5 |
| 4 Wochen | 34,8 | 60,5 | 29,8 | 24,2 | 89,2 | 37,5 |
| 6 Wochen | 39,1 | 71,5 | 32,2 | 28,1 | 94,2 | 40,0 |

### Vergleichsbeispiel:

Als Basisdünger wurde ein handelsüblicher NPK-Dünger mit einer durchschnittlichen Korngröße von 3 mm eingesetzt. Der Dünger wurde mit einem Beschichtungsmaterial umhüllt, das aus einem Polyisocyanat und einer Polyolkomponente erhalten wurde, wie in Beispiel 1 von EP-A-0 230 601 beschrieben.

## Patentansprüche

1. Beschichteter körniger Stoff, wobei die Beschichtung das Reaktionsprodukt aus (A) einem Addukt, welches durch Umsetzung von
(A-i) einer Fett(säure)komponente mit einer durchsmittlichen Doppelbindüngsfünktionalität von mindestens 2 im Fettsäurerest mit
(A-ii) einer mindestens einfach ungesättigten Carbonsäurekomponente oder Carbonsäureanhydridkomponente
erhältlich ist, und (B) einer Epoxidkomponente umfaßt.

2. Beschichteter körniger Stoff nach Anspruch 1, wobei der körnige Stoff zumindest teilweise wasserlöslich ist.

3. Beschichteter körniger Stoff nach einem der Ansprüche 1 oder 2, wobei die Beschichtung wasser- oder wasserdampfdurchlässig aber wasserunlöslich ist.

4. Beschichteter körniger Stoff nach einem der Ansprüche 1 bis 3, wobei sich die Beschichtung aus mehr als einer Schicht des Reaktionsproduktes zusammensetzt, und die Schichten jeweils gleiche oder unterschiedliche Schichtdicke aufweisen und jeweils teilweise oder vollständig umhüllend ausgeprägt sein können.

5. Beschichteter körniger Stoff nach einem der Ansprüche 1 bis 4, wobei der körnige Stoff aus Düngemitteln, Pflanzenschutzmitteln, Insektiziden, Pestiziden, Fungiziden, Trocknungsmitteln und Gemischen davon ausgewählt ist.

6. Beschichteter körniger Stoff nach einem der Ansprüche 1 bis 5 wobei der körnige Stoff eine durchschnittliche Korngröße von 0,5 bis 10 mm Durchmesser aufweist.

7. Beschichteter körniger Stoff nach einem der Ansprüche 1 bis 6, wobei die Epoxidkomponente (B) einen Epoxidsauerstoffgehalt von 1 bis 20 Gew.-% aufweist.

8. Verfahren zur Herstellung des beschichteten körnigen Stoffes nach einem der Ansprüche 1 bis 7, umfassend die Schritte:
(a) Bereitstellen eines körnigen Stoffes,
(b) Bereitstellen eines Beschichtungsmaterials, umfassend (A) ein Addukt, welches durch Umsetzung von
(A-i) einer Fett(säure)komponente mit einer durchsmittlichen Doppelbindüngsfünktionalität von mindestens 2 im Fettsäurerest mit
(A-ii) einer mindestens einfach ungesättigten Carbonsäurekomponente oder Carbonsäureanhydridkomponente
erhältlich ist, und (B) eine Epoxidkomponente,
(c) Zugabe des Beschichtungsmaterials zu dem bereitgestellten körnigen Stoff,
(d) Erzeugung einer Beschichtung auf dem körnigen Stoff, und
(e) gegebenenfalls Wiederholung der Schritte (c) und (d).

9. Verfahren nach Anspruch 8, wobei in Schritt (a) der körnige Stoff in auf eine Temperatur von 50 bis 250°C vorgeheizter Form bereitgestellt wird.

10. Verfahren, nach einem der Ansprüche 8 oder 9, wobei in Schritt (b) das Beschichtungsmaterial in lösungsmittelfreier Form bereitgestellt wird.

11. Verfahren nach einem der Ansprüche 8 bis 10, wobei Schritt (d) die Härtung des Beschichtungsmaterials umfaßt.

12. Verfahren nach einem der Ansprüche 8 bis 11, wobei Schritt (d) bei einer Temperatur von 50 bis 250°Cdurchgeführt wird.

13. Verfahren nach einem der Ansprüche 8 bis 12, wobei die säuremodifizierte Fett(säure)komponente durch Umsetzung von
(A-i) einer im Fettsäurerest mindestens einfach ungesättigten Fett(säure)komponente mit
(A-ii) einer mindestens einfach ungesättigten Carbonsäurekomponente oder Carbonsäureanhydridkomponente
erhältlich ist.

14. Verfahren nach einem der Ansprüche 8 bis 13, wobei die Fett(säure)komponente (A-i) in Form von natürlichen Fetten und/oder Ölen bereitgestellt wird.

15. Verfahren nach einem der Ansprüche 8 bis 14, wobei die Fett(säure)komponente (A-i) in Form von ungesättigten Fettsäuren oder deren Derivaten bereitgestellt wird.

16. Verfahren nach einem der Ansprüche 8 bis 15, wobei die Komponente (A-ii) aus Carbonsäureanhydriden ausgewählt aus Maleinsäureanhydrid, Itaconsäureanhydrid, Phthalsäureanhydrid, Naphthalin-1,8-dicarbonsäureanhydrid, oder Nadicsäureanhydrid oder aus Carbonsäuren ausgewählt aus Maleinsäure, Acrylsäure, Methacrylsäure, Phthalsäure oder Fumarsäure oder Gemischen davon ausgewählt ist.

17. Verfahren nach einem der Ansprüche 8 bis 16, wobei die Zugabe und/oder die Erzeugung der Beschichtung kontinuierlich durchgeführt wird.

## Claims

1. A coated granular material, wherein the coating comprises the reaction product of (A) an adduct which is obtainable by the reaction of
(A-i) a fatty (acid) component having an average double bond functionality of at least 2 in the fatty acid group with
(A-ii) an at least mono-unsaturated carboxylic acid component or carboxylic acid anhydride component,
and (B) an epoxide component.

2. The coated granular material of claim 1, wherein the granular material is at least partially water-soluble.

3. The coated granular material of claim 1 or 2, wherein the coating is permeable to water or water-vapor, but is water-insoluble.

4. The coated granular material of any of claims 1 to 3, wherein the coating is composed of more than one layer of the reaction product, and the layers each have the same or different layer thicknesses and each can be partially or completely encapsulating.

5. The coated granular material of any of claims 1 to 4, wherein the granular material is selected from the group consisting of fertilizers, crop protection agents, insecticides, pesticides, fungicides, drying agents and mixtures thereof.

6. The coated granular material of any of claims 1 to 5, wherein the granular material has an average grain size of 0.5 to 10 mm diameter.

7. The coated granular material of any of claims 1 to 6, wherein the epoxide component (B) has an epoxide oxygen content of 1 to 20 wt.-%.

8. A method for the preparation of the coated granular material of any of claims 1 to 7, comprising the steps of:
(a) providing a granular material,
(b) providing a coating material, comprising (A) an adduct which is obtainable by the reaction of
(A-i) a fatty (acid) component having an average double bond functionality of at least 2 in the fatty acid group with
(A-ii) an at least mono-unsaturated carboxylic acid component or carboxylic acid anhydride component, and (B) an epoxide component,
and (B) an epoxide component,
(c) adding of the coating material to the provided granular material,
(d) generating a coating on the granular material, and
(e) optionally repeating steps (c) and (d).

9. The method of claim 8, wherein in step (a) the granular material is provided in a form, which is preheated to a temperature of 50 to 250 °C.

10. The method of claim 8 or 9, wherein in step (b) the coating material is provided in a solvent-free form.

11. The method of any of claims 8 to 10, wherein step (d) comprises curing of the coating material.

12. The method of any of claims 8 to 11, wherein step (d) is carried out at a temperature of 50 to 250 °C.

13. The method of any of claims 8 to 12, wherein the acid-modified fatty (acid) component is obtainable by the reaction of
(A-i) a fatty (acid) component which is at least mono-unsaturated in the fatty acid group with
(A-ii) an at least mono-unsaturated carboxylic acid component or carboxylic acid anhydride component.

14. The method of any of claims 8 to 13, wherein the fatty (acid) component (A-i) is provided in form of natural fats and/or oils.

15. The method of any of claims 8 to 14, wherein the fatty (acid) component (A-i) is provided in form of unsaturated fatty acids or derivatives thereof.

16. The method of any of claims 8 to 15, wherein the component (A-ii) is selected from carboxylic acid anhydrides selected from the group consisting of maleic acid anhydride, itaconic acid anhydride, phthalic acid anhydride, naphthaline-1,8-dicarboxylic acid anhydride or nadic acid anhydride or from carboxylic acids selected from the group consisting of maleic acid, acrylic acid, methacrylic acid, phthalic acid or fumaric acid or mixtures thereof.

17. The method of any of claims 8 to 16, wherein the adding and/or the generating of the coating is carried out continuously.

## Revendications

1. Matière granulée enrobée, dont le revêtement comprend le produit de réaction d'un produit d'addition (A), lequel est obtenu par modification
(A-i) d'un composant (d'acide) gras avec une fonctionnalité moyenne à double liaison d'au moins 2 dans le résidu d'acide gras par
(A-ii) un composant d'acide carboxylique ou un composant anhydride d'acide carboxylique au moins monoinsaturés,
et (B) un composant époxyde.

2. Matière granulée enrobée selon la revendication 1, où la matière granulée est au moins partiellement soluble dans l'eau.

3. Matière granulée enrobée selon l'une des revendications 1 ou 2, où le revêtement est perméable à l'eau ou à la vapeur d'eau, mais insoluble dans l'eau.

4. Matière granulée enrobée selon l'une des revendications 1 à 3, où le revêtement se compose de plus d'une couche de produits de réaction, où les couches présentent chacune des épaisseurs de couche identiques ou différentes, et où elles peuvent chacune être **caractérisées en** réalisant un enrobage partiel ou intégral.

5. Matière granulée enrobée selon l'une des revendications 1 à 4, où la matière granulée est choisie parmi des substances fertilisantes, des produits phytosanitaires, insecticides, pesticides, fongicides, des agents déshydratants et des mélanges de ceux-ci.

6. Matière granulée enrobée selon l'une des revendications 1 à 5, où la matière granulée présente une granulométrie moyenne de diamètre compris entre 0,5 et 10 mm.

7. Matière granulée enrobée selon l'une des revendications 1 à 6, où le composant époxyde (B) a une teneur en oxygène époxyde comprise entre 1 à 20 % en poids.

8. Procédé de fabrication de la matière granulée enrobée selon l'une des revendications 1 à 7, comprenant les étapes de :
(a) préparation d'une matière granulée,
(b) préparation d'une matière de revêtement comportant (A) un produit d'addition, lequel est obtenu par modification
(A-i) d'un composant (d'acide) gras avec une fonctionnalité moyenne à double liaison d'au moins 2 dans le résidu d'acide gras par
(A-ii) un composant d'acide carboxylique ou un composant anhydride d'acide carboxylique au moins monoinsaturés,
et (B) un composant époxyde,
(c) ajout de la matière de revêtement à la matière granulée préparée,
(d) production d'un revêtement sur la matière granulée, et
(e) répétition éventuelle des étapes (c) et (d).

9. Procédé selon la revendication 8, où dans l'étape (a), la matière granulée est préparée dans un moule préchauffé à une température comprise entre 50 et 250 °C.

10. Procédé selon l'une des revendications 8 ou 9, où dans l'étape (b), la matière de revêtement est préparée sous une forme exempte de solvants.

11. Procédé selon l'une des revendications 8 à 10, où l'étape (d) comprend le durcissement de la matière de revêtement.

12. Procédé selon l'une des revendications 8 à 11, où l'étape (d) est réalisée à une température comprise entre 50 et 250 °C.

13. Procédé selon l'une des revendications 8 à 12, où le composant (d'acide) gras modifié par acide est obtenu par modification
(A-i) d'un composant (d'acide) gras au moins monoinsaturé dans le résidu d'acide gras par
(A-ii) un composant d'acide carboxylique ou un composant anhydride d'acide carboxylique au moins monoinsaturés.

14. Procédé selon l'une des revendications 8 à 13, où le composant (d'acide) gras (Ai) est préparé sous forme de graisses et/ou d'huiles naturelles.

15. Procédé selon l'une des revendications 8 à 14, où le composant (d'acide) gras (Ai) est préparé sous la forme d'acides gras insaturés ou de dérivés de ceux-ci.

16. Procédé selon l'une des revendications 8 à 15, où le composant (A-ii) est choisi parmi des anhydrides carboxyliques choisis parmi l'anhydride maléique, l'anhydride itaconique, l'anhydride phtalique, l'anhydride naphthalène-1,8-dicarbonique ou l'anhydride nadique, ou est choisi parmi des acides carboxyliques choisis parmi l'acide maléique, l'acide acrylique, l'acide méthacrylique, l'acide phtalique ou l'acide fumarique ou des mélanges de ceux-ci.

17. Procédé selon l'une des revendications 8 à 16, où l'ajout et/ou la production du revêtement sont réalisés de façon continue.
